# EUROPÄISCHE PATENTSCHRIFT

(11) **EP 0 538 665 B1**
(45) Veröffentlichungstag und Bekanntmachung des Hinweises auf die Patenterteilung: **17.01.1996**
(21) Anmeldenummer: 92116968.6
(22) Anmeldetag: 05.10.1992
(51) Int. Cl.: B60R 21/26, F42B 3/04

(54) **Gasgenerator**
Gas generator
Générateur de gaz

(30) Priorität: 19.10.1991 DE 9113005 U
(43) Veröffentlichungstag der Anmeldung: 28.04.1993
(73) Patentinhaber: TEMIC Bayern-Chemie Airbag GmbH, D-84544 Aschau (DE)
(72) Erfinder: Geisreiter, Christian, W-8000 München 90 (DE)
(74) Vertreter: Maute, Hans-Jürgen, Dipl.-Ing.

(56) Entgegenhaltungen:
- EP-A- 0 373 288
- DE-C- 3 921 472
- DE-U- 9 010 853
- DE-U- 9 013 130

## Beschreibung

Die Neuerung betrifft einen Gasgenerator mit einer an die Treibstoffkammer anschließenden und mit dieser durch Öffnungen verbundenen Expansionskammer mit Filtern für den austretenden Gasstrom, wobei ein umlaufender Filter an der durchbrochenen Gehäuseaußenwand anliegt und von einer Trennwand, dem sogenannten Filterrohr, gehalten oder gestützt wird.

Bei Gasgeneratoren kommt es darauf an, den in der Treibstoffkammer erzeugten Gasstrom möglichst schnell und gleichmäßig aus den Öffnungen in der Gehäuseaußenwand zur Füllung des Airbags austreten zu lassen. Dabei muß das Gas abgekühlt und von den im Gasstrom enthaltenen Partikeln gereinigt werden.

Dazu wird das Gas zunächst durch einen Grobfilter und dann durch einen an der Gehäuseaußenwand anliegenden Feinfilter geführt (siehe DE 39 21 472 C1).

Der bis zum Filterrohr heruntergezogene Feinfilter liegt aber nicht zwingend an seinem gesamten Umfang an der Gehäuseaußenwand an. Dadurch entweicht ein Teil des Gases zwischen dem Filter und der Gehäuseaußenwand und ist weder gekühlt noch gefiltert. Auch eine Bauform des Gasgenerators, bei dem der Filter mit Hilfe aus dem Filterrohr ausgestanzter und umgebogener Laschen gehalten wird, löst das Problem nur unbefriedigend, da eine Abdichtung des Filterrandes gegenüber der Gehäuseaußenwand nur dann sinnvoll ist, wenn sie über den gesamten Umfang wirksam ist.

Aufgabe der vorliegenden Erfindung ist es, eine Lösung aufzuzeigen, die die genannten Nachteile vermeidet und eine wirksame Filterung und Reinigung des Gasstromes von Partikeln erzielt.

Gelöst wird diese Aufgabe dadurch, daß zwischen dem Filterrohr und einem Rand des Filters eine ringförmige Klemm- und Ablenkvorrichtung angeordnet ist, die den Rand des Filters an die Gehäuseaußenwand drückt. Weitere kennzeichnende Merkmale sind den Unteransprüchen entnehmbar.

Mit Hilfe dieses Vorschlages werden eine Reihe von Vorteilen erzielt. Die ringförmige Klemmvorrichtung dichtet den, dem Gasstrom zugewandten Rand des Filters am gesamten Umfang gleichmäßig gegenüber der Gehäuseaußenwand ab und hält ihn in seiner Einbaulage fest. Der Filter wird im unteren Bereich vor lokalen thermischen Überlastungen durch den durch die Filterrohröffnungen strömenden Gasstrahl geschützt.

Die Vormontage der Klemmvorrichtung ist sehr einfach. Die ringförmige Klemmvorrichtung wird auf das Filterrohr gelegt, beim Anpressen zentriert und fixiert sich von selbst mit Hilfe der am inneren Rand angebrachten Stützfüßchen.

Der Filter kann gegenüber der bisher bekannten Bauform kürzer ausgeführt sein, wodurch ein Kostenvorteil entsteht, der sogar die Herstellkosten der Klemmvorrichtung überwiegt. Die am inneren Rand der Klemmvorrichtung vorgesehene Schlackenfangrinne reduziert deutlich den Anteil der Fein- und Grobpartikel im Gasstrom und bewirkt durch die Verwirbelung des Gases eine wirksamere Ausnutzung der Filtereintrittsfläche. Insgesamt wird durch die Verwendung er Klemmvorrichtung die Leistung des Gasgenerators weniger reduziert als mit den üblichen Methoden zur Filterung von Partikeln.

Die Zeichnung und die nachfolgende Beschreibung erläutern den Gegenstand der Neuerung anhand eines Ausführungsbeispiels.

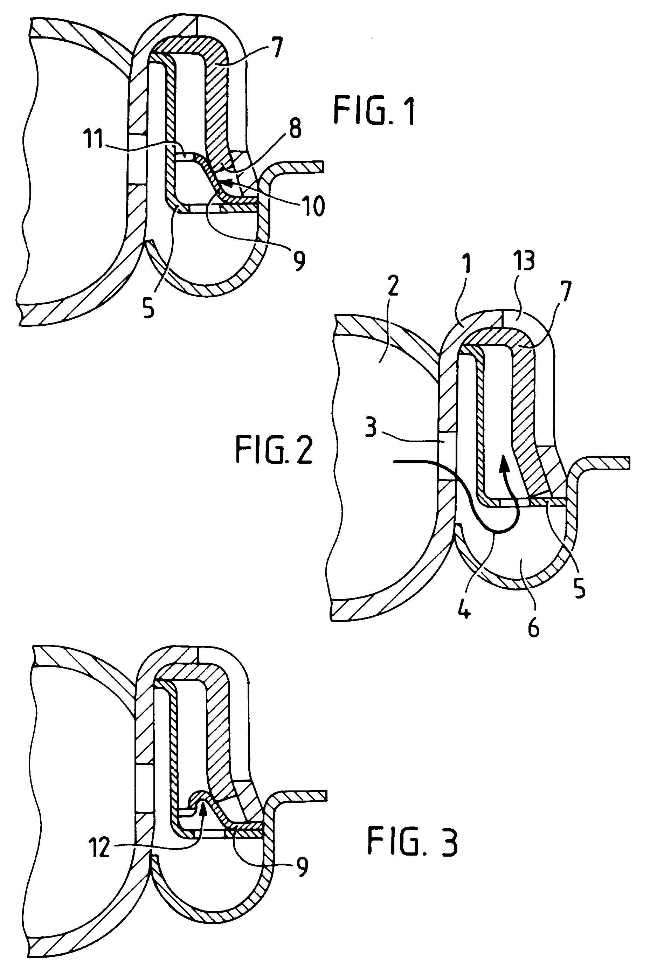

Zum Vergleich ist in Figur 2 stark vereinfacht ein Teilschnitt durch einen Gasgenerator nach dem Stand der Technik dargestellt. Das Gehäuse 1 ist in Blechbauweise hergestellt und enthält eine Treibstoffkammer 2. Das in der Treibstoffkammer 2 erzeugte Treibgas entweicht - wie es der Weg des Gasstromes 4 zeigt - über Öffnungen 3 in die Expansionskammer 6.

Von dort führt der Gasstrom 4 durch das durchbrochene Filterrohr 5 in den zweiten Teil des Expansionsraumes 6. Dort ist ein Filter 7 angeordnet, das vor den Austrittsöffnungen 13 liegt. Das Filterrohr 5 hält den Filter 7 in seiner Position. An der Stelle, an der der Gasstrom 4 nach dem Durchtritt durch das Filterrohr 5 auf den Filter 7 trifft, ergibt sich das Problem der Undichtigkeit. Dar Grund hierfür liegt darin, daß der Filter 7 nur unzureichend an die Gehäusewand 1 gedrückt wird.

Dieser Nachteil wird durch die Lösung, die in Figur 1 dargestellt ist, auf einfache Weise behoben. Vor dem Zusammenbau des Gasgenerators wird auf das Filterrohr 5 die ringförmige Klemmvorrichtung 9 aufgeschoben. Diese Klemmvorrichtung zeigt im Schnitt einen abgeflachten Z-förmigen Verlauf. Der zur Treibstoffkammer 2 weisende innere Rand der Klemmvorrichtung 9 besitzt eine Anzahl von Stützfüßchen 11, die sich am Filterrohr 5 fixieren. Durch die Zwischenräume zwischen den Stützfüßchen strömt das erzeugte Treibgas zum Filter 7.

Wie im Schnitt durch die Klemmvorrichtung 9 gut zu erkennen, weist deren mittlerer Bereich eine ringförmige umlaufende Anlagefläche 10 auf. Diese ist in einem flachen Winkel zur Innenwand des Gehäuses 1 geneigt. Damit wird bei der Montage der untere Rand 8 des Filters 7 eingeklemmt und abgedichtet. Es ist auch gut zu erkennen, daß der Filter 7 in Figur 1 erheblich kürzer ist als derjenige in Figur 2.

Die Klemmvorrichtung 9 aus Figur 3 stellt eine Variante zur Figur 1 dar. An die Anlagefläche 10 schließt hier eine umlaufende Rinne 12 an, die zum auftretenden Gasstrom hin offen ist. In dieser Rinne werden die im Gasstrom enthaltenen Schlackenpartikel abgefangen. Zusätzlich wird der Gasstrom vor dem Auftreffen auf den Filter verwirbelt.

Mit dieser Ausführung der Klemmvorrichtung wird ohne zusätzliche Kosten für andere Einbauten der Partikelausstoß reduziert, ohne die Leistung des Gasgenerators - wie bei anderen Methoden zur Partikelfilterung - erheblich zu vermindern.

## Patentansprüche

1. Gasgenerator mit einer an die Treibstoffkammer anschließenden und mit dieser durch Öffnungen verbundenen Expansionskammer mit Filtern für den austretenden Gasstrom, wobei ein umlaufender Filter an der durchbrochenen Gehäuseaußenwand anliegt und von einer Trennwand, dem sogenannten Filterrohr, gehalten oder gestützt wird, dadurch gekennzeichnet, daß zwischen dem Filterrohr (5) und einem Rand (8) des Filters (7) eine ringförmige Klemmvorrichtung (9) angeordnet ist, die den Rand (8) des Filters (7) an die Gehäuseaußenwand (1) drückt.

2. Gasgenerator nach Anspruch 1, dadurch gekennzeichnet, daß die Klemmvorrichtung (9) eine zu einem Bereich der Gehäuseaußenwand (1) geneigt verlaufende Anlagefläche (10) aufweist.

3. Gasgenerator nach Anspruch 1 oder 2, dadurch gekennzeichnet, daß die Klemmvorrichtung (9) an ihrem inneren Rand mit Stützfüßchen (11) ausgestattet ist.

4. Gasgenerator nach einem der Ansprüche 1 bis 3, dadurch gekennzeichnet, daß die Klemmvorrichtung (9) eine zum anströmenden Gas (4) hin offene Rinne (12) aufweist.

## Claims

1. Gas generator with an expansion chamber abutting the fuel compartment and connected to the latter by openings, with filters for the escaping gas flow, wherein a peripheral filter rests against the perforated housing outer wall and is held or supported by a dividing wall, the so-called filtering tube, characterised in that between the filtering tube (5) and an edge (8) of the filter (7) a ring-shaped clamping device (9) is disposed, which presses the edge (8) of the filter (7) against the housing outer wall (1).

2. Gas generator according to claim 1, characterised in that the clamping device (9) comprises a contact surface (10) running oblique to an area of the housing outer wall (1).

3. Gas generator according to claim 1 or 2, characterised in that the clamping device (9) is equipped at its inner edge with support legs (11).

4. Gas generator according to any one of claims 1 to 3, characterised in that the clamping device (9) comprises a groove (12) open towards the inflowing gas (4).

## Revendications

1. Générateur de gaz présentant une chambre de détente raccordée à la chambre de combustible et reliée avec celle-ci par des ouvertures, présentant des filtres pour le courant gazeux sortant, un filtre rotatif étant adjacent à la paroi externe du boîtier ajourée et étant maintenu ou soutenu par une paroi de séparation, le tuyau-filtre ainsi appelé, caractérisé en ce que, entre le tuyau-filtre (5) et un bord (8) du filtre (7), est disposé un dispositif de serrage (9) annulaire qui serre le bord (8) du filtre (7) contre la paroi externe du boîtier (1).

2. Générateur de gaz selon la revendication 1, caractérisé en ce que le dispositif de serrage (9) présente une surface d'affleurement (10) ayant une trajectoire inclinée vers un domaine de la paroi externe du boîtier (1).

3. Générateur de gaz selon la revendication 1 ou 2, caractérisé en ce que le dispositif de serrage (9) est muni sur son bord interne de petits pieds d'appui (11).

4. Générateur de gaz selon l'une quelconque des revendications 1 à 3, caractérisé en ce que le dispositif de serrage (9) présente une rigole (12) ouverte vers le gaz entrant (4).
